# DEMANDE DE BREVET EUROPEEN

(11) **EP 2 172 719 A2**
(43) Date de publication de la demande: **07.04.2010**
(21) Numéro de dépôt: 09172283.5
(22) Date de dépôt: 06.10.2009
(51) Int. Cl.: F24J 3/08, F24F 5/00, F28F 13/12

(54) **Installation de géothermie**

(30) Priorité: 06.10.2008 FR 0856761
(71) Demandeur: Cluny Concept, 71250 Jalogny (FR)
(72) Inventeur: Beaumont, Claude, 71250, Jalogny (FR)
(74) Mandataire: Thibault, Jean-Marc

(57) **Abrégé**

L'invention concerne une installation de géothermie comportant :
- un capteur **(3)** enterré dans le sol **(2)** comportant un collecteur tubulaire enterré,
- un bloc d'entrée d'air **(4)** relié à une extrémité du collecteur tubulaire dont l'autre extrémité est reliée à un bloc de sortie **(5)** non enterré,
- des moyens **(7)** de mise en circulation de l'air à l'intérieur du capteur entre son entrée et sa sortie,

Selon l'invention, des moyens de création de canaux d'air hélicoïdaux **(11)** sont montés de manière espacée à l'intérieur du collecteur tubulaire **(3)** afin que l'air décrive un mouvement hélicoïdal sur les parois internes du collecteur tubulaire **(3)** et en ce que le collecteur tubulaire **(3)** est pourvu d'une isolation thermique **(20)** sur une partie **(3₃)** de sa longueur enterrée en amont du bloc de sortie et jusqu'au bloc de sortie.

## Description

La présente invention concerne le domaine technique de la géothermie au sens général et elle vise plus précisément une installation de géothermie dite de surface permettant de récupérer l'énergie du sous-sol.

Dans l'état de la technique, il a été proposé de nombreuses solutions techniques pour récupérer l'énergie du sous-sol en mettant en oeuvre des installations appelées usuellement puits canadien ou puits provençal. Ce type d'installation comporte une canalisation tubulaire enterrée dans le sol, reliée à une extrémité, à un bloc d'entrée d'air et à son autre extrémité, à un bloc de sortie. Cette installation est équipée de moyens permettant d'assurer la mise en circulation de l'air à l'intérieur de la conduite de manière à prélever les calories ou les frigories à partir de l'échange thermique entre le sol et l'air circulant à l'intérieur de la canalisation. Le bloc de sortie est relié à tout type d'installation de refroidissement ou climatisation d'air tel que des pompes à chaleur.

De manière classique, une telle canalisation présente un faible diamètre (de l'ordre de 200 mm) et une longueur relativement importante généralement supérieure à 30 mètres. Dans le cas où il apparaît nécessaire de réduire la longueur d'une telle canalisation enterrée, il apparaît une perte du transfert thermique entre le sol et l'air circulant à l'intérieur de la canalisation. En d'autres termes, il n'existe pas d'installation de géothermie de faible longueur, par exemple inférieur à 40 mètres capable de fournir de gros débit d'air avec un bon transfert thermique entre le sol et l'air circulant à l'intérieur d'une telle canalisation.

Pour tenter de remédier à ces inconvénients, le document DE 24 43 463 a proposé de réaliser une installation de géothermie comportant un capteur enterré dont le collecteur tubulaire est pourvu de chicanes entraînant une perturbation de l'écoulement de l'air. Ces chicanes constituent des obstacles à la circulation de l'air conduisant à des effets tourbillonnaires empêchant d'obtenir une circulation libre de l'air à l'intérieur du collecteur enterré.

De même, le document DE 200 13 561 décrit une installation de géothermie comportant un tube interne d'entrée d'air entouré concentriquement par un tube externe délimitant avec le tube interne, le circuit de retour pour l'air. Seul le tube externe participe à l'échange thermique avec le sol, ce qui limite les performances thermiques d'une telle installation.

L'objet de l'invention vise donc à remédier aux inconvénients des techniques antérieures en proposant une nouvelle installation de géothermie adaptée pour maximiser les échanges thermiques entre le sol et l'air pour un collecteur d'air de faible longueur avec un grand diamètre.

Pour atteindre un tel objectif, l'installation de géothermie comporte :
- un capteur enterré dans le sol comportant un collecteur tubulaire enterré,
- un bloc d'entrée d'air relié à une extrémité du collecteur tubulaire dont l'autre extrémité est reliée à un bloc de sortie non enterré,
- des moyens de mise en circulation de l'air à l'intérieur du capteur entre son entrée et sa sortie.

Selon l'invention, des moyens de création de canaux d'air hélicoïdaux sont montés de manière espacée à l'intérieur du collecteur tubulaire afin que l'air décrive un mouvement hélicoïdal sur les parois internes du collecteur tubulaire et en ce que le collecteur tubulaire est pourvu d'une isolation thermique sur une partie de sa longueur enterrée en amont du bloc de sortie et jusqu'au bloc de sortie.

De plus, l'installation selon l'invention peut comporter en combinaison au moins l'une des caractéristiques additionnelle suivantes :
- les moyens de création des canaux d'air hélicoïdaux sont réalisés par une bague montée sur la paroi interne du collecteur tubulaire et pourvue d'ailettes s'étendant radialement sur une partie du diamètre du collecteur tubulaire,
- le collecteur tubulaire comporte un tube annelé sur sa surface externe en contact avec du béton hydrofuge fluidifié,
- le bloc de sortie est équipé d'une isolation thermique,
- le bloc de sortie comporte une prise d'air de régulation munie d'un obturateur commandé, le collecteur tubulaire étant pourvu d'un registre commandé de fermeture,
- le collecteur tubulaire est pourvu en amont du bloc de sortie, d'un capteur de température relié à une unité de contrôle et de régulation reliée à un capteur de température de l'air extérieur,
- le bloc d'entrée d'air est pourvu d'un couvercle amovible donnant accès à une cartouche de filtration interchangeable pour purifier l'air pénétrant dans le collecteur tubulaire,
- la cartouche de filtration est pourvue d'une ouverture pour la pulvérisation d'un produit de décontamination, cette ouverture étant fermée par le couvercle lorsque ce dernier occupe sa position de fermeture,
- le bloc d'entrée d'air se présente sous la forme d'une logette destinée à être montée à côté des boîtiers d'arrivée de fluides en limite d'un terrain, le bloc d'entrée comportant une paroi verticale arrière ajourée pour l'entrée d'air et une paroi verticale avant munie d'un couvercle d'accès à une cartouche de filtration,
- l'unité de contrôle et de régulation comporte :
   - des moyens de calcul de l'énergie récupérée à partir du débit d'air dans le collecteur et des températures de l'air extérieur et de l'air à l'intérieur d'un collecteur,
   - des moyens de comparaison entre l'énergie récupérée et l'énergie consommée par les moyens de mise en circulation de l'air à l'intérieur du collecteur,
   - et des moyens pour piloter le fonctionnement des moyens de mise en circulation de l'air en fonction de la différence entre les énergies récupérée et consommée,
- le bloc de sortie d'air est relié à une pompe à chaleur, à une installation de récupération d'énergie et/ou de ventilation,
- l'unité de contrôle et de régulation pilote le fonctionnement des moyens de mise en circulation de l'air à l'intérieur du collecteur tubulaire et d'un actionneur associé à l'échangeur d'une pompe à chaleur,
- l'unité de contrôle et de régulation pilote l'ouverture et la fermeture de l'obturateur et du registre en fonction de la température de l'air extérieur et la température de consigne.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue en coupe élévation montrant un exemple de réalisation d'une installation de géothermie conforme à 1'invention.

La **Figure 2** est une vue en plan d'un détail caractéristique de l'objet de l'invention.

La **Figure 3** est une vue en perspective montrant l'objet de l'invention en position montée.

La **Figure 4** est une vue en coupe élévation d'un exemple de réalisation d'un bloc d'entrée d'air conforme à l'invention.

L'objet de l'invention concerne une installation de géothermie **1** adaptée pour récupérer l'énergie du sous-sol **2.** L'installation comporte un capteur **3** enterré dans le sol, relié à une extrémité, à un bloc d'entrée d'air **4** et à l'autre extrémité, à un bloc de sortie **5.** De manière classique, cette installation comporte des moyens **7** de mise en circulation de l'air à l'intérieur du capteur **3,** entre son entrée **4** et sa sortie **5.**

Dans l'exemple de réalisation illustré, les moyens de mise en circulation de l'air **7** sont réalisés par une turbine d'aspiration placée au niveau du bloc de sortie **5.** Bien entendu, il doit être compris que ces moyens de mise en circulation de l'air **7** peuvent être réalisés de toute manière connue et placés à tout endroit pour assurer la circulation de l'air et par exemple le soufflage de l'air à l'intérieur du capteur enterré **3.**

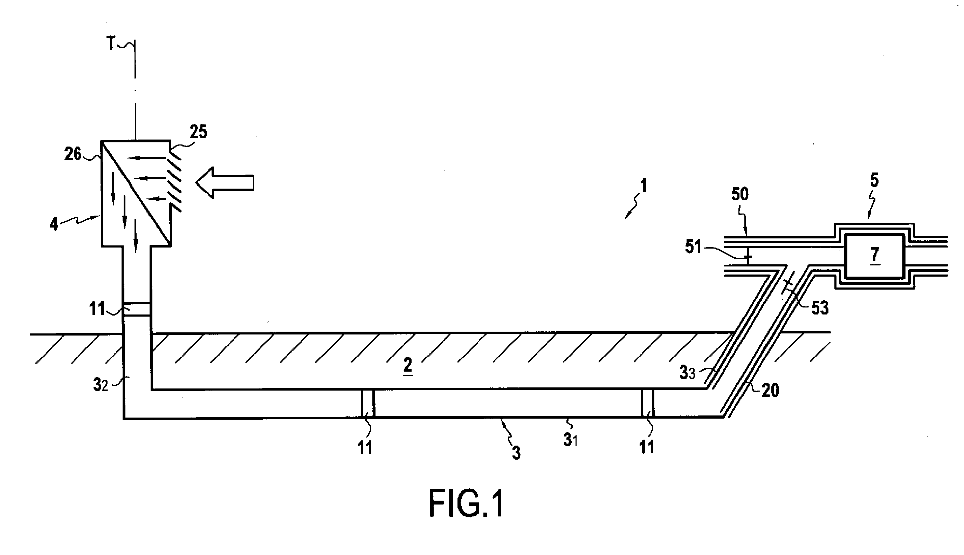

Tel que cela ressort plus précisément de la **Fig. 1**, le capteur **3** comporte un collecteur tubulaire enterré permettant de capter l'énergie du sous-sol afin de la restituer à l'air circulant à l'intérieur du collecteur. Selon une caractéristique de l'invention, le collecteur **3** est étanche et présente une résistance mécanique adaptée pour résister aux mouvements du terrain et à la pression du sous-sol. Le collecteur tubulaire **3** comporte par exemple un tube en matière plastique rigide annelé à sa surface externe entourée par un enrobage de rigidification et de stockage d'énergie. Avantageusement, cet enrobage est réalisé par une couche de béton hydrofuge fluidifié et de préférence armé. Cette couche de béton enveloppe le tube annelé sur toute sa surface externe en pénétrant entre les parties annelées de manière à assurer un bon transfert d'énergie entre le sol et l'air circulant à l'intérieur du collecteur **3.**

De préférence, le collecteur tubulaire délimite intérieurement une section droite transversale circulaire dont le diamètre est supérieur à 200 mm, par exemple de l'ordre de 300 à 500 mm. Par exemple, un tel collecteur tubulaire **3** est enterré à une profondeur comprise entre de l'ordre de 1,5 et 3 mètres. Le collecteur tubulaire **3** possède une longueur par exemple inférieure à quelques dizaines de mètres et comporte une partie centrale **3₁** s'étendant sensiblement parallèlement à la surface de sol avec de préférence une légère pente de l'ordre par exemple de 2 %. Cette partie centrale **3₁** est reliée au bloc d'entrée **4** par une descente **3₂** et par une remontée **3₃** au bloc de sortie **5.** La descente **3₂** et la remontée **3₃** du collecteur tubulaire s'étend verticalement ou incliné.

De préférence, le collecteur tubulaire **3** est équipé de moyens permettant de récupérer les condensats évacués éventuellement par l'intermédiaire d'une pompe.

Selon une caractéristique de l'objet de l'invention, le collecteur tubulaire **3** est équipé intérieurement de moyens **11** de création de canaux d'air hélicoïdaux sur les parois interne du collecteur tubulaire **3.** Ces moyens de création **11** sont adaptés pour forcer l'air à décrire un mouvement hélicoïdal (ou vortex) sur les parois internes du collecteur tubulaire **3.** Ces moyens **11** permettent de maximiser les échanges thermiques entre l'air et les parois du collecteur tubulaire **3.** Avantageusement, ces moyens de création de canaux d'air hélicoïdaux **11** sont montés de manière espacée à l'intérieur du collecteur tubulaire **3.** En d'autres termes, des moyens **11** sont montés à intervalles réguliers ou non à l'intérieur du collecteur tubulaire **3.**

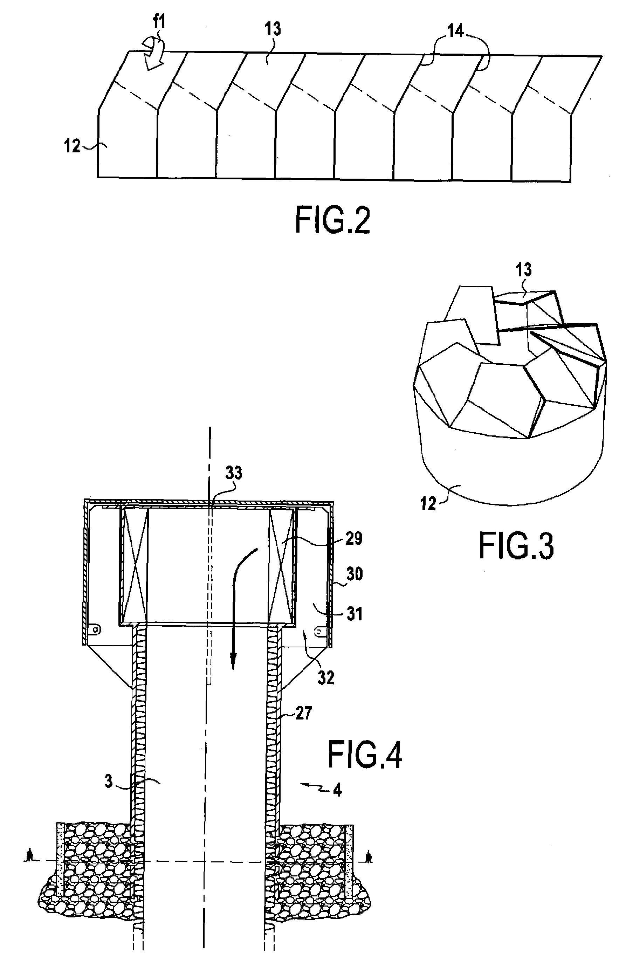

Tel que cela ressort plus précisément des Fig. **2** et **3**, ces moyens **11** sont réalisés sous la forme d'une bague **12** pourvue d'ailettes ou de pales **13** s'étendant radialement sur une partie du diamètre du collecteur tubulaire **3.** Par exemple, cette bague **12** est réalisée par une bande en matière plastique ou en métal. Cette bande est pourvue régulièrement à partir de l'un de ses bords longitudinaux, de découpes **14** réalisées vers l'autre bord selon une direction inclinée s'étendant sur sensiblement la demie largeur de la bande. Ces découpes permettent de délimiter entre elles des parties de bandes qui sont pliées ou rabattues par rapport au plan de la bande selon la flèche f₁ de manière à constituer les pales ou les ailettes **13**.

Cette bande est repliée pour former une bague cylindrique **12** destinée à être montée à l'intérieur du collecteur tubulaire **3.** Par exemple, le maintien de la bague **12** à l'intérieur du collecteur tubulaire **3** s'effectue par l'élasticité de la matière de sorte que la bague vient naturellement se plaquer contre la paroi interne du collecteur tubulaire **3**.

En décrivant un mouvement hélicoïdal sur les parois internes du collecteur tubulaire **3**, l'air parcourt un chemin plus important que la longueur effective du collecteur tubulaire **3**. La longueur du capteur enterrée peut alors être réduite par rapport à une installation classique en conservant les mêmes performances d'échanges thermiques. Le mouvement impliqué à l'air augmente sa vitesse relative améliorant de ce fait les performances d'échanges thermiques. Il doit être compris que ces canaux d'air hélicoïdaux sur les parois internes du collecteur tubulaire permettent de maximiser les échanges thermiques. Ces bagues **12** sont espacées de manière à relancer régulièrement la turbulence de l'air pour vaincre l'effet COANDA.

Selon une autre caractéristique de l'objet de invention, le collecteur tubulaire **3** est pourvu d'une isolation thermique **20** sur une partie de sa longueur enterrée en amont du bloc de sortie et jusqu'au bloc de sortie **5.** En d'autres termes, il doit être considéré que le collecteur tubulaire **3** est isolé thermiquement sur sa remontée **3₃** pour éviter de perdre les calories ou frigories prélevées.

Avantageusement, le bloc de sortie **5** est également isolé thermiquement.

Il doit être compris que le bloc d'entrée **3** peut être réalisé de toute manière appropriée. Dans l'exemple de réalisation illustré à la **Fig. 1**, le bloc d'entrée d'air **4** se présente sous la forme d'un boîtier ou d'une logette destiné à être monté à côté des boîtiers d'arrivée de fluide en limite d'un terrain **T**. Par exemple, ce bloc d'entrée d'air **4** est installé à côté des boîtiers d'arrivée d'électricité ou de téléphone. Le bloc d'entrée **4** comporte une paroi verticale arrière **25**, ajourée pour permettre l'entrée de l'air et comporte également une paroi verticale avant **26** munie d'un couvercle d'accès à une cartouche de filtration. Les parois verticales arrière **25** et avant **26** s'ouvrent respectivement du côté intérieur et du côté extérieur du terrain **T** dans laquelle l'installation **1** est placée. L'intervention de maintenance est donc facilitée par l'accès extérieur pour le changement du filtre.

La **Fig. 4** illustre un autre exemple de réalisation du bloc d'entrée **4** comportant un tube support **27** fixé sur la descente du collecteur tubulaire **3.** Ce tube support **27** délimite un logement de réception pour une cartouche **29** de filtration interchangeable. Le tube support **27** assure le maintien d'un couvercle amovible **30** en forme de coiffe délimitant avec la cartouche filtrante **29**, une enceinte annulaire **31** délimitant à sa base une ouverture d'entrée d'air **32**. Le couvercle **30** est amovible pour pouvoir accéder à la cartouche de filtration **29** qui est pourvue avantageusement d'une ouverture **33** pour la pulvérisation d'un produit de décontamination. Cette ouverture **33** est fermée par le couvercle **30** lorsque ce dernier occupe sa position de fermeture comme illustré à la **Fig. 4**. L'air pénètre ainsi à l'intérieur du collecteur tubulaire **3** en ayant préalablement traversé la cartouche filtrante **29** qui permet une décontamination bactériologique de l'air avant son entrée dans le collecteur tubulaire **3.**

Selon une caractéristique préférée de réalisation, le bloc de sortie **5** comporte une prise d'air de régulation **50** munie d'un obturateur commandé **51** relié à une unité de contrôle et de régulation non représentée.

Le collecteur tubulaire **3** est pourvu également au niveau de sa sortie, d'un registre commandé de fermeture **53** relié également à l'unité de contrôle et de régulation. De préférence, mais non exclusivement, le registre commandé de fermeture **53** est adapté pour obturer uniquement partiellement le collecteur tubulaire **3** lorsque ce registre occupe sa position de fermeture.

Avantageusement, le collecteur tubulaire **3** est pourvu en amont du bloc de sortie **5**, d'un capteur de température relié également à l'unité de contrôle et de régulation. De même, la prise d'air de régulation **50** est pourvue d'un capteur de température de l'air extérieur pénétrant à l'intérieur de la prise d'air de régulation. Ce capteur de température est également relié à l'unité de contrôle et de régulation.

Selon une caractéristique avantageuse de réalisation, l'unité de contrôle et de régulation comporte des moyens de calcul de l'énergie récupérée à partir du débit d'air dans le collecteur et des températures de l'air extérieur et de l'air à l'intérieur du collecteur. Cette unité de contrôle et de régulation comporte également des moyens pour comparer l'énergie récupérée et l'énergie consommée par les moyens de mise en circulation de l'air **11** à l'intérieur du collecteur. Cette unité de contrôle et de régulation comporte des moyens pour piloter le fonctionnement des moyens de mise en circulation de l'air **11** en fonction des différences entre les énergies récupérées et consommées. Cette unité de contrôle et de régulation permet ainsi en fonction de la température de l'air à l'intérieur du collecteur tubulaire **3** et de l'air extérieur, d'optimiser le rendement de l'installation.

Le bloc de sortie **5** est destiné à être relié à tout équipement de climatisation ou de chauffage et/ou de refroidissement d'air. Le bloc de sortie **5** peut être relié par exemple à une installation de récupération d'énergie et/ou de ventilation ou à une pompe à chaleur.

L'unité de contrôle et de régulation pilote l'ouverture et la fermeture de l'obturateur **51** et du registre **53** en fonction de la température de l'air extérieur et d'une température de consigne à ne pas dépasser.

L'invention n'est pas limitée aux exemples décrits et représentés car diverses modifications peuvent y être apportées sans sortir de son cadre.

## Revendications

1. Installation de géothermie comportant :
- un capteur **(3)** enterré dans le sol **(2)** comportant un collecteur tubulaire enterré,
- un bloc d'entrée d'air **(4)** relié à une extrémité du collecteur tubulaire dont l'autre extrémité est reliée à un bloc de sortie **(5)** non enterré,
- des moyens **(7)** de mise en circulation de l'air à l'intérieur du capteur entre son entrée et sa sortie,
**caractérisée en ce que** des moyens de création de canaux d'air hélicoïdaux **(11**) sont montés de manière espacée à l'intérieur du collecteur tubulaire **(3)** afin que l'air décrive un mouvement hélicoïdal sur les parois internes du collecteur tubulaire **(3)** et **en ce que** le collecteur tubulaire **(3)** est pourvu d'une isolation thermique **(20)** sur une partie **(3₃)** de sa longueur enterrée en amont du bloc de sortie et jusqu'au bloc de sortie.

2. Installation selon la revendication 1, **caractérisée en ce que** les moyens de création des canaux d'air hélicoïdaux **(11)** sont réalisés par une bague **(12)** montée sur la paroi interne du collecteur tubulaire et pourvue d'ailettes **(13)** s'étendant radialement sur une partie du diamètre du collecteur tubulaire.

3. Installation selon la revendication 1 ou 2, **caractérisée en ce que** le collecteur tubulaire **(3)** comporte un tube annelé sur sa surface externe en contact avec du béton hydrofuge fluidifié.

4. Installation selon l'une des revendications 1 à 3, **caractérisée en ce que** le bloc de sortie **(5)** est équipé d'une isolation thermique.

5. Installation selon la revendication 4, **caractérisée en ce que** le bloc de sortie **(5)** comporte une prise d'air de régulation **(50)** munie d'un obturateur commandé **(51)**, le collecteur tubulaire **(3)** étant pourvu d'un registre commandé de fermeture **(53)**.

6. Installation selon la revendication 5, **caractérisée en ce que** le collecteur tubulaire **(3)** est pourvu en amont du bloc de sortie, d'un capteur de température relié à une unité de contrôle et de régulation reliée à un capteur de température de l'air extérieur.

7. Installation selon la revendication 1, **caractérisée en ce que** le bloc d'entrée d'air **(4)** est pourvu d'un couvercle amovible **(30)** donnant accès à une cartouche de filtration interchangeable (**29**) pour purifier l'air pénétrant dans le collecteur tubulaire **(3)**.

8. Installation selon la revendication 7, **caractérisée en ce que** la cartouche de filtration **(29)** est pourvue d'une ouverture **(33)** pour la pulvérisation d'un produit de décontamination, cette ouverture **(33)** étant fermée par le couvercle **(30)** lorsque ce dernier occupe sa position de fermeture.

9. Installation selon la revendication 1 ou 7, **caractérisée en ce que** le bloc d'entrée d'air **(4)** se présente sous la forme d'une logette destinée à être montée à côté des boîtiers d'arrivée de fluides en limite d'un terrain **(T)**, le bloc d'entrée **(4)** comportant une paroi verticale arrière **(25)** ajourée pour l'entrée d'air et une paroi verticale avant **(26)** munie d'un couvercle d'accès à une cartouche de filtration.

10. Installation selon la revendication 6, **caractérisée en ce que** l'unité de contrôle et de régulation comporte :
- des moyens de calcul de l'énergie récupérée à partir du débit d'air dans le collecteur et des températures de l'air extérieur et de l'air à l'intérieur d'un collecteur,
- des moyens de comparaison entre l'énergie récupérée et l'énergie consommée par les moyens de mise en circulation de l'air à l'intérieur du collecteur,
- et des moyens pour piloter le fonctionnement des moyens de mise en circulation de l'air en fonction de la différence entre les énergies récupérée et consommée.

11. Installation selon la revendication 1, **caractérisée en ce que** le bloc de sortie d'air **(5)** est relié à une pompe à chaleur, à une installation de récupération d'énergie et/ou de ventilation.

12. Installation selon les revendications 6 et 11, **caractérisée en ce que** l'unité de contrôle et de régulation pilote le fonctionnement des moyens de mise en circulation de l'air à l'intérieur du collecteur tubulaire et d'un actionneur associé à l'échangeur d'une pompe à chaleur.

13. Installation selon les revendications 5 et 12, **caractérisée en ce que** l'unité de contrôle et de régulation pilote l'ouverture et la fermeture de l'obturateur **(50)** et du registre **(53)** en fonction de la température de l'air extérieur et la température de consigne.
